## Europäisches Patentamt

## European Patent Office

## Office européen des brevets

(19)

(11) Veröffentlichungsnummer: **0 063 635**
**B1**

(12) **EUROPÄISCHE PATENTSCHRIFT**

(45) Veröffentlichungstag der Patentschrift:
**13.02.85**

(21) Anmeldenummer: **81103243.2**

(22) Anmeldetag: **29.04.81**

(51) Int. Cl.⁴: **F 16 F 9/30,** F 16 F 9/06,
F 16 F 9/48

(54) **Hydraulisch wirkender Stoss- und Schwingungsdämpfer.**

(43) Veröffentlichungstag der Anmeldung:
**03.11.82 Patentblatt 82/44**

(45) Bekanntmachung des Hinweises auf die Patenterteilung:
**13.02.85 Patentblatt 85/7**

(84) Benannte Vertragsstaaten:
**AT BE FR GB IT SE**

(56) Entgegenhaltungen.
**DE - A - 2 302 657**
**DE - A - 2 324 402**
**DE - A - 2 338 035**
**DE - A - 2 438 180**
**DE - A - 2 533 579**
**DE - A - 2 549 672**
**DE - A - 2 647 697**
**DE - A - 2 942 029**
**DE - B - 1 183 384**
**FR - A - 592 271**
**FR - E - 51 022**
**GB - A - 390 741**
**GB - A - 748 469**
**GB - A - 1 440 389**
**US - A - 2 348 160**
**US - A - 2 963 175**
**US - A - 3 489 087**
**US - A - 3 887 224**

(73) Patentinhaber: **Lochner, Kaspar, Karlsburger Strasse 61,
D-8000 München (DE)**

(72) Erfinder: **Lochner, Kaspar, Karlsburger Strasse 61,
D-8000 München (DE)**

(74) Vertreter: **Kressin, Horst-Rüdiger, Dr., Patentanwälte
WIEGAND NIEMANN KOHLER GLAESER KRESSIN
Herzog-Wilhelm-Strasse 16, D-8000 München 2 (DE)**

## Beschreibung

Die Erfindung betrifft einen hydraulisch wirkenden Stoß- und Schwingungsdämpfer mit einem einseitig geschlossenen Zylinder, der eine Zylinderkammer umschließt, einem in dem Zylinder verschiebbaren mit einer als Düse ausgebildeten Steueröffnung versehenen Kolben, der mit einer aus dem offenen Ende des Zylinders herausragenden hohlen Kolbenstange verbunden ist, die eine Ausgleichskammer und einen von derselben durch einen verschiebbaren Trennkolben abgetrennten, mit einem kompressiblen Mittel versehenen Kompressionsraum enthält, wobei Zylinderkammer und Ausgleichskammer mit einem nicht-newtonschen Dämpfungsfluid gefüllt sind, das bei Belastung des Stoßdämpfers aus der Zylinderkammer über die Steueröffnung in die Ausgleichskammer und umgekehrt preßbar ist.

Die US-A-2 963 175 betrifft einen hydraulisch wirkenden Stoßdämpfer für Eisenbahnwaggons, der aus einem Zylinder und einer in dem Zylinder gleitend gelagerten hohlen Kolbenstange besteht. Im Boden der Kolbenstange ist eine Öffnung vorgesehen, durch die ein Meßstab hindurchgesteckt ist. Der Meßstab ist mit einem Ende am Boden des Zylinders befestigt, und auf der anderen Seite weist der Meßstab eine im Innern der hohlen Kolbenstange angeordnete kegelförmige Kopfscheibe auf, die verhindert, daß die hohle Kolbenstange aus dem Zylinder herausrutscht und wobei die kegelförmige Kopfscheibe als Strömungswiderstand für das Hydrauliköl dient. Für die Abdichtung der das Hydrauliköl enthaltenden Zylinderkammer gegenüber der gleitenden Kolbenstange ist ein kompliziertes System von Dichtungen, Führungsringen und Abstreifringen vorgesehen, die in entsprechende Ausnehmungen auf dem Außenumfang der hohlen Kolbenstange oder in die Zylinderinnenwand eingelegt sind. Der bekannte Dämpfer entspricht im Prinzip dem aus der obigen Literaturstelle »Machine Design« bekannten Dämpfer und weist daher die gleichen wesentlichen Nachteile auf, die bereits bei den Dämpfern der obigen Literaturstelle aufgezählt worden sind.

Die DE-A-2 324 402 betrifft einen hydraulisch wirkenden Stoßdämpfer aus einem einseitig geschlossenen Zylinder, einem in dem Zylinder verschiebbaren, mit einer Steueröffnung versehenen und mit einer aus dem offenen Ende des Zylinders herausragenden hohlen Kolbenstange verbundenen Kolben, einer mit einem nicht-newtonschen Dämpfungsfluid gefüllten Kammer und einem davon durch einen verschiebbaren Trennkolben abgetrennten, mit einem kompressiblen Mittel versehenen Raum, wobei das Dämpfungsfluid bei Belastung des Stoßdämpfers aus der Kammer über die Steueröffnung in den dahinter angeordneten Raum und umgekehrt preßbar ist.

Die Steueröffnung besteht hier aus einer querschnittsveränderlichen Nut in der Zylinderinnenwand, an der der Kolben vorbeigleitet. Bei Stoßbelastung des Dämpfers fließt das nichtnewtonsche Fluid aus der Zylinderdruckkammer über einen Kragen und einen Kolbenring des Kolbens in einen in die Seitenfläche des Kolbens eingelassenen Ringkanal und wandert dann durch eine Öffnung im Ringkanal in das Innere des hohlen Kolbens. Durch den Zufluß des Fluids in diesen Raum wird der schwimmende Kolben verschoben und preßt dadurch das Druckgas im Druckraum der hohlen Kolbenstange weiter zusammen.

Dieser Dämpfer hat den Nachteil, daß der Dämpfer sehr kompliziert aufgebaut ist und er eine Reihe schwierig zu fertigender Präzisionsteile enthält. Darüber hinaus wird die Steueröffnung aus Teilen gebildet, die aneinander vorbeigleiten und somit dem Verschleiß unterworfen sind, so daß die Gefahr besteht, daß bei Dauerbeanspruchung des Dämpfers der Dämpfkraftaufbau durch den Verschleiß der Teile nachläßt und die Steuernut in der Zylinderinnenwand von dem mit ihr in Berührung stehenden Kragen des Kolbens mit der Zeit abgeschliffen wird und der Stoßdämpfer somit unwirksam wird oder verklemmt. Als Dämpfmedium wird ein thixotropes Fluid (Fett) verwendet. Bei einem thixotropen Fluid nimmt die Viskosität mit zunehmender Beanspruchungszeit bei konstanter Beanspruchungshöhe bzw. konstanter Schergeschwindigkeit ab. Somit würde der Dämpfkraftverlauf immer nur für einen bestimmten einzelnen Belastungsfall und eine definierte Belastungszeit bestimmbar sein. Unterschiedliche Belastungszeiten würden hier zwangsläufig zu unterschiedlichen Dämpfkraftverläufen führen.

Die US-A-3 489 087 betrifft einen hydraulisch wirkenden Stoßdämpfer mit einem einseitig geschlossenen Zylinder, einem in dem Zylinder verschiebbaren Kolben mit aus dem offenen Ende des Zylinders herausragender Kolbenstange, einer mit einem nicht-newtonschen, inkompressiblen Dämpfungsfluid gefüllten Kammer und einen davon durch einen verschiebbaren Trennkolben abgetrennten, mit einem kompressiblen Mittel versehenen Raum. Der Kolben ist mit einer mittig angeordneten durchgehenden Öffnung für den Durchtritt des inkompressiblen Dämpfungsfluids versehen, und in der hohlen Kolbenstange wird ein Trennkolben mittels einer Spiralfeder gegen die Düsenöffnung 18 des Kolbens gedrückt. Die Düse ist sehr schmal und sehr lang ausgebildet, damit beim Durchtritt der Flüssigkeit durch die Öffnung zumindest eine gewisse Reibung und damit eine gewisse Umwandlung der Stoßenergie in Wärme eintritt. Als kompressibles Mittel wird in diesem Fall also eine Spiralfeder verwendet; und als inkompressibles Dämpfmedium wird bei der bekannten Vorrichtung eine »pseudoplastische« Flüssigkeit, nämlich eine Kohlenwasserstoffemulsion, Polymerlösung oder eine sogenannte »Bingham«-Flüssigkeit, die nicht näher präzisiert ist, verwendet. Mit dem bekannten Stoßdämpfer ist kein idealer Dämpfkraftverlauf in Rechteckform erreichbar. Ferner wird in der US-A-3 489 087, in Spalte 1, Zeilen 37 bis 54 ausdrücklich dargelegt, daß hydraulisch wirkende Dämpfer, bei denen ein Meßstift in einer Düse vor- und zurückbewegt wird, für die Dämpfung von Stoßbelastungen über einen weiteren Bereich nicht geeignet sind, da der Durchmesser des Meßstiftes eine Funktion seiner Länge ist und die jeweilige Ausgestaltung des Meßstiftes Schwierigkeiten bereitet. Für jeden andersgearteten Dämpfungsvorgang muß ein eigener Stift erstellt werden, dessen Querschnitt sich über die Länge nicht-linear verändert und deshalb maschinell schwierig herstellbar ist.

Die DE-A-2 438 180 betrifft einen mit Hydrauliköl gefüllten Pralldämpfer bzw. Stoßfänger für Kraftfahrzeuge, bei dem der Rückhub nach dem Aufprall gebremst werden soll, um einen Nachfolgeschaden an dem Fahrzeug zu verhindern. Diese spezielle Aufgabe wird durch ein ganz spezielles Wirkungsprinzip gelöst. In dem einseitig geschlossenen Zylinder ist ein Kolben verschiebbar angeordnet. Der Kolben, der mit einer Öffnung ausgerüstet ist, bewegt sich mit so viel Spiel im äußeren Zylinder, daß das in der Zylinderkammer befindliche Öl am Kolben vorbei in eine Ringkammer fließen kann, die den Kolben umgibt. Die Ringkammer ist durch eine Büchse aus Teflon oder Nylon abgedichtet. Die Büchse dient dazu, den Aufprall und den Rückhub zu bremsen. Dies erfolgt dadurch, daß die Büchse, die im normalen Zustand spannungsfrei in dem im Durchmesser erweiterten Teil des äußeren Zylinders liegt, beim Einwärtshub (Zusammenstoß) in eine Ringnut des Innenzylinders gepreßt wird. Dabei wird ein großer Teil der Stoßenergie durch die elastische Büchse, die als mechanische Gummifeder wirkt, aufgenommen. Nach dem Zusammenstoß, d. h. beim Rückhub in die Anfangsstellung bremst die verformte Büchse die Rückstellung der Zylinder durch Reibung ab.

Der Erfindung lag daher die Aufgabe zugrunde, einen Stoßdämpfer zu gestalten, der im Hauptarbeitsbereich eine möglichst vom Hub unabhängige, von der Anfangsgeschwindigkeit des Kolbens dagegen abhängige Dämpfkraft aufweist, der möglichst keine verschleißgefährdeten Teile enthält und der trotz konstruktiv einfacher Bauweise einen hohen Dämpfkraftaufbau auch bei unterschiedlichen Temperaturbereichen ermöglicht und der auch als lastabhängiger Schwingungsdämpfer (z. B. Federbein) einsetzbar sein soll.

Die Aufgabe wird gelöst durch einen hydraulisch wirkenden Stoß- und Schwingungsdämpfer der eingangs angegebenen Art, der dadurch gekennzeichnet ist, daß die Steueröffnung mit einem in sie hineinragenden Steuerelement zusammenwirkt, dessen Querschnitt sich über die Länge ändert, und das Dämpfungsfluid eine dauerplastische, homogene Paste aus Graphit, 0,1 bis 8 Gew.-% Netzmittel, 0,1 bis 10 Gew.-% Strukturviskositätsmittel und 40 bis 70 Gew.-% Polyglykoläther, Polyglykolester und/oder einem gesättigten aromatischen oder aliphatischen Carbonsäureester jeweils bezogen auf das Gesamtgewicht der Paste (8) ist.

Mit dem erfindungsgemäßen Stoß- und Schwingungsdämpfer lassen sich die verschiedensten Dämpfungsvorgänge auf einfachste Weise regeln, ohne daß dazu komplizierte oder entsprechend groß dimensionierte Dämpfer mit hoher Maßgenauigkeit verwendet werden müssen. Die Rückstellung des Dämpfers in die Ausgangslage erfolgt ebenfalls in gedämpfter Form. Durch die Kombination bzw. Zusammenwirken der in Anspruch 1 beschriebenen Maßnahmen wird ein gleichmäßiger Dämpfkraftaufbau im Hauptarbeitsbereich über den Hub erreicht.

Der Dämpfer zeichnet sich außerdem dadurch aus, daß er, wegen seiner einfachen Konstruktion sehr störunanfällig ist, eine sehr lange Lebensdauer aufweist und in jeder Lage bzw. Position einsetzbar ist. Bei entsprechender Druckbeaufschlagung des Gasraumes in der hohlen Kolbenstange ist der Stoßdämpfer als lastabhängiger Schwingungsdämpfer, z. B. als Kraftfahrzeugfederbein einsetzbar, wobei durch den in die Düsenöffnung hineingeschobenen Steuerstift die Dämpfung dem jeweiligen Einfederungszustand angepaßt ist. Ist das Fahrzeug z. B. unbeladen, so sinkt der Steuerstift weniger tief in die Düsenöffnung hinein als bei beladenem Fahrzeug. Somit ergibt sich eine von der jeweiligen Last abhängige Dämpfkraftlinie.

Wesentlich für den erfindungsgemäßen Dämpfer ist, daß mit dem erfindungsgemäßen inkompressiblen, hoch-wärmeleitfähigen Dämpfungsfluid schon beim Durchströmen sehr einfacher Öffnungen bzw. Bohrungen ein Dämpfkraftaufbau zu erreichen ist, der mit üblichen Dämpfungsölen nur bei sehr großem konstruktiven Aufwand erreichbar ist. Das Dämpfungsfluid bleibt auch bei hoher Scherbeanspruchung homogen, wodurch eine Dämpfungsharmonie erreicht wird, die mit üblichen Dämpferflüssigkeiten nicht erreichbar ist. Ein weiterer Vorteil des erfindungsgemäßen Dämpfers liegt darin, daß feine Oberflächenungenauigkeiten vom Dämpfmedium ausgefüllt werden und so die Bewegung der gleitenden Vorrichtungteile erleichtert wird.

Mit dem erfindungsgemäßen Dämpfer läßt sich ein extrem hoher Dämpfungsaufbau mit einfachsten Mitteln erreichen, wobei Strömungsgeschwindigkeiten in den Drosselöffnungen des Kolbens von ca. 170 m/sec und mehr erreichbar sind, ohne daß sich das Dämpfungsmedium trennt, inhomogen wird, schäumt oder zersetzt wird.

Die Länge des Zylinders ist so ausgebildet, daß der Kolben den ganzen Hub durchfahren kann und gleichzeitig das Dämpffluidvolumen aufgenommen wird. Wenn eine geringe Rückstellung des Kolbens gewünscht wird, weist ein Teil des Raumes der hohlen Kolbenstange einen größeren Querschnitt auf, als der restliche Teil und diesem Fall ist der Trennkolben vorzugsweise im erweiterten Kolbenstangenteil angeordnet.

Die Kolbenstange ist durch einen einfachen Dichtungsring gegenüber dem Zylinder abgedichtet.

Das kompressible Mittel im Raum der hohlen Kolbenstange besteht vorzugsweise aus Luft unter Normaldruck oder Überdruck, wobei gegebenenfalls ein zusätzliches mechanisches Federelement im Raum zur Verbesserung der Rückstellung und/oder des dynamischen Ausschubes des Dämpfers angeordnet ist. Das mechanische Federelement ist vorzugsweise eine Spiralfeder, Kegelpufferfeder, Gummifeder, ein elastischer Kunststoffblock oder eine Gummimanschette.

Nach einer Ausgestaltung des erfindungsgemäßen Dämpfers weist die Kolbenstange einen teilweise erweiterten Querschnitt an der dem Kolben gegenüberliegenden Seite der Kolbenstange auf, wobei der Trennkolben in dem erweiterten Teil der Kolbenstange angeordnet ist.

Das Steuerelement ist vorzugsweise als Stift ausgebildet mit konischer, parabolischer oder abgestufter Form und besteht insbesondere aus einem festen temperaturstabilen Material, insbesondere Metall. Der Steuerstift kann insbesondere auch mit zur Spitze hin abnehmendem Querschnitt ausgebildet sein, wobei der Stift in Längsrichtung (Axialrichtung) mit mindestens einer Nut oder einer Abflachung, z. B. Abfräsung ausgerüstet sein. Der Steuerstift kann aber auch aus einem bei Krafteinwirkung sich verändernden Material bestehen, insbesondere aus Kunststoff oder Gummi. Der Steuerstift ist vorzugsweise am Trennkolben oder an der Bodenfläche des Zylinders angeordnet, wobei der Steuerstift gegebenenfalls am Boden des Zylinders auch in abgefederter Form angebracht sein kann.

Nach einer bevorzugten Ausgestaltungsform des erfindungsgemäßen Dämpfers kann das Steuerelement auch aus mindestens einem in der Zylinderinnenwand angeordneten Keil bestehen, an dem die im seitlichen Rand des Kolbens angeordnete durchgehende Steueröffnung berührungsfrei vorbeigleitet, wenn der Kolben ein- oder ausgefahren wird. Dabei wird der Öffnungsquerschnitt entsprechend vergrößert bzw. verkleinert. Der Querschnitt des Keils nimmt nach unten hin zu, so daß sich die Querschnittsfläche verkleinert, wenn der Kolben bei Stoßbelastung in den Zylinder hineingeschoben wird. Die Öffnung im Kolben ist in diesem Fall vorzugsweise schlitzförmig ausgebildet.

Nach einer Ausgestaltung des erfindungsgemäßen Dämpfers weist die axial im Kolben als durchgehende Öffnung ausgebildete Steueröffnung insbesondere einen zylindrischen, parabolischen, kegelförmigen oder abgestuften zylindrischen Querschnitt auf. Die Öffnung kann insbesondere mit einem flexiblen oder elastischen Mittel, insbesondere aus Kunststoff ausgekleidet sein. Der für die Auskleidung verwendete Kunststoff ist vorzugsweise ein Elastomer.

Nach einer Ausgestaltung des erfindungsgemäßen Dämpfers enthält das Dämpfungsfluid insbesondere einen Polyglykoläther und/oder -ester einer Viskosität von etwa 10 mm²/s bis 1000 mm²/s bei 50°C, vorzugsweise von etwa 40 mm²/s bis 300 mm²/s bei 50°C, wobei der Stockpunkt zwischen −50°C und −0°C, insbesondere −40°C bis −10°C liegt. Die relative mittlere Molmasse der Polyglykoläther und/oder -ester liegt bei etwa 700 bis 20 000, insbesondere etwa 1100 bis 3800, vorzugsweise etwa 1100 bis 2300.

Besonders vorteilhaft haben sich als Polyglykoläther die Mono- und/oder Diäther der Polyäthylen-, Polypropylen- oder Polybutylenglykole erwiesen, wobei die Äthergruppe des Mono- oder Diäthers insbesondere eine gesättigte, geradkettige oder verzweigte Alkoxygruppe mit 1 bis 10 C-Atomen, insbesondere 2 bis 6 C-Atomen ist, insbesondere ein Polyäthylenglykolmonoäthyläther, -propyläther oder -butyläther, Polypropylenglykolmonoäthyläther, -propyläther oder -butyläther, Polybutylenglykolmonomethyläther, -äthyläther, -propyläther, -butyläther oder -pentyläther.

Geeignet sind als Polyglykolester insbesondere die Mono- und/oder Diester der Polyäthylen-, Polypropylen- oder Polybutylenglykole, insbesondere Monoester des Polyäthylen-, Polypropylen- oder Polybutylenglykolmonoäthers.

Die Polyglykoläther, Polyglykolester und/oder gesättigten aromatischen oder aliphatischen Carbonsäureester werden vorzugsweise in einer Menge von etwa 50 bis 60 Gew.-%, bezogen auf das Gesamtgewicht der Paste eingesetzt.

Die homogene Dämpfungspaste die in den erfindungsgemäßen Dämpfern verwendet wird enthält vorzugsweise als Carbonsäureester einen Ester eines gesättigten, aliphatischen Alkohols mit einer gesättigten, aliphatischen $C_5$ bis $C_{12}$ Monocarbonsäure oder einer gesättigten aliphatischen Dicarbonsäure, Dibenzolcarbonsäure oder Tribenzolcarbonsäure. Besonders bevorzugt von den Dicarbonsäuren sind die $C_5$ bis $C_{12}$-Dicarbonsäuren, insbesondere die Phthalsäure, Terephthalsäure und die Isophthalsäure. Besonders geeignet sind auch die Ester des Pentaerythrits, Trimethylolpropans und Trimethylpropanols, die Ester der Adipinsäure, der Glutarsäure, Pimelinsäure, Trimellitsäure, Trimesinsäure und/oder Hemimellitsäure.

Als Netzmittel wird in der Dämpfungspaste insbesondere ein Aminsalz der Ölsäure, Linolsäure, Palmitinsäure und/oder Stearinsäure, Talgfettsäurediamine, Kokosfettsäurediamine, fluorierter Alkylpolyoxyäthylenäthanol, Kaliumfluoralkylcarboxylat und/oder fluoriertes Alkylammoniumjodid eingesetzt. Das Netzmittel liegt in der Paste insbesondere in einer Menge von 0,5 bis 6 Gew.-%, bezogen auf das Gesamtgewicht der Paste vor.

Das Strukturviskositätsmittel der erfindungsgemäß verwendeten Paste besteht insbesondere aus gemahlenem Aluminiumsilikat oder amorphem Siliciumdioxid, wobei die Menge insbesondere bei 0,5 bis 5 Gew.-%, bezogen auf das Gesamtgewicht der Paste liegt. Besonders geeignet sind die Bentonite.

Die erfindungsgemäß verwendete Paste kann zusätzlich noch 0,1 bis 3 Gew.-% eines Antioxidationsmittels, bezogen auf das Gesamtgewicht der Paste enthalten. Das Antioxidationsmittel besteht insbesondere aus sterisch gehinderten Alkylphenolen und/oder Thiophenolen und/oder Dialkylseleniden. Besonders bevorzugt als Antioxidationsmittel sind Kresol-Verbindungen und Bis-Phenolverbindungen, wie das Di-tert.-butyl-p-kresol und Methylen-4,4-(2,6-ditert.)-butylphenol.

Damit während der Druckbelastung kein Vakuum im Dämpfer oberhalb des Kolbens erzeugt wird, ist die Wand der Zylinder vorzugsweise mit einer Öffnung für den Druckausgleich ausgerüstet.

Nach einer Ausgestaltung des erfindungsgemäßen Dämpfers kann der Innenraum der Kolbenstange zur Niveauregulierung über mindestens ein Regulierventil mit mindestens einem gesonderten Druckbehälter, der außerhalb des Dämpfers angeordnet ist, verbunden sein.

Der erfindungsgemäße Dämpfer ist vorzugsweise ein Aufzugsdämpfer, Pralldämpfer, Raddämpfer oder Motordämpfer.

Der erfindungsgemäße Dämpfer wird anhand der Zeichnungen ausführlicher beschrieben, wobei alle aus der Beschreibung und den Zeichnungen hervorgehobenen Einzelheiten oder Merkmale zur Lösung der Aufgabe im Sinne der Erfindung beitragen können und mit dem Willen zur Patentierung in die Anmeldung aufgenommen wurden. Es zeigt

Fig. 1 einen Längsschnitt durch einen erfindungsgemäßen Aufzugsdämpfer bzw. Pralldämpfer,

Fig. 2 einen Längsschnitt durch den Dämpfer nach Fig. 1 mit einem teilweise erweiterten Kolbenstangenquerschnitt,

Fig. 3 ein Dämpfkraft/Weg-Diagramm des Dämpfers nach Fig. 1.

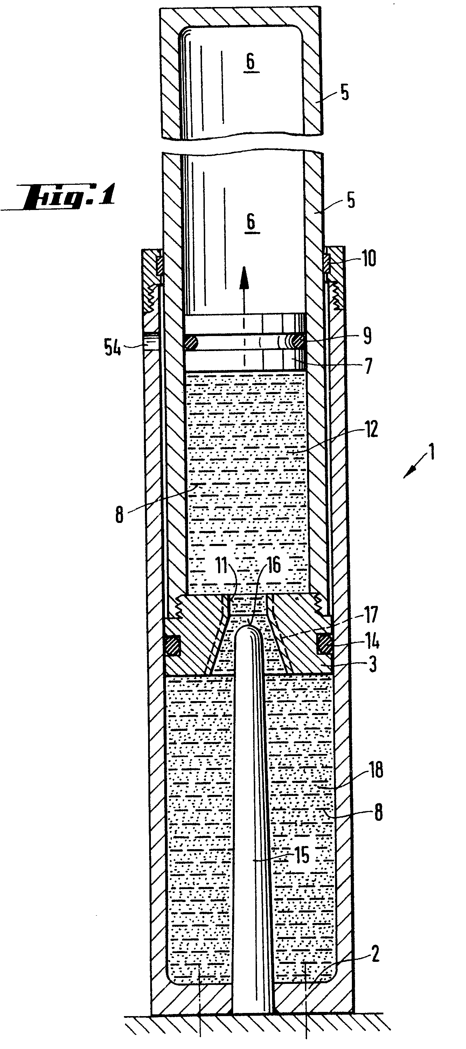

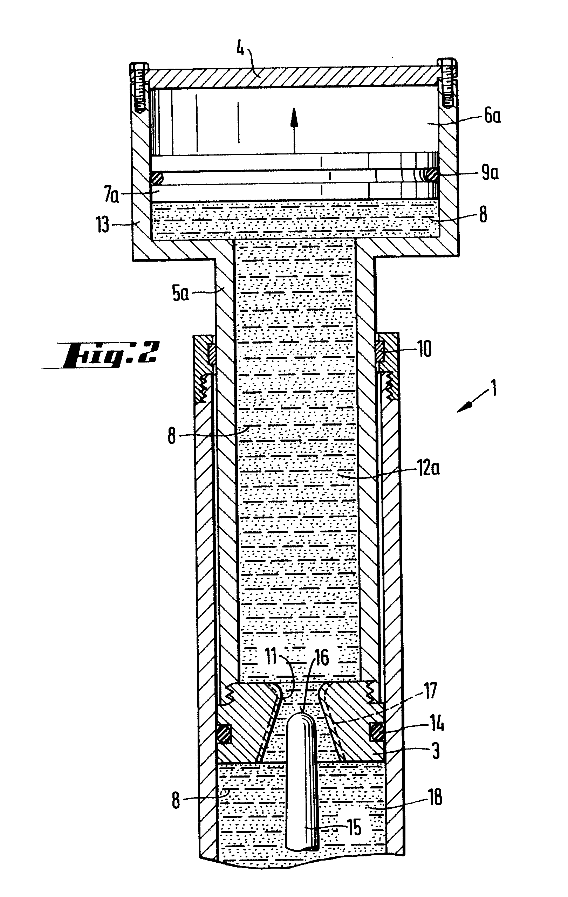

Die in Fig. 1 und 2 dargestellten Dämpfer sind insbesondere als Aufzugsdämpfer, Pralldämpfer oder Schwingungsdämpfer einsetzbar. Der Boden 2 des Zylinders 1 ist z. B. am Fahrzeugrahmen oder an einem festen Bauteil befestigt, während die Abschlußplatte 4 der Kolben 5 z. B. mit einer Stoßstange (nicht dargestellt) verbunden ist oder als Aufnahmefläche für die aufprallende Last dient. Der mit der hohlen Kolbenstange 5 verbundene Kolben 3 ist am Zylinder 1 verschiebbar geführt. Die Kolbenstange 5 weist vorzugsweise einen etwas kleineren Außendurchmesser als der Kolben 3 auf. In dem Raum 6 (Kompressionsraum) der Kolbenstange 5 befindet sich eine Druckgasfüllung, die durch den Trennkolben 7 von dem inkompressiblen Dämpfungsfluid 8 getrennt ist. Der Trennkolben 7 ist mit einem Ring 9, 9a zur Abdichtung des Trennkolbens gegenüber der Kolbenstange ausgerüstet.

Der in Fig. 1 dargestellte Dämpfer ist trotz der primitiven Bauweise und normaler Zylindergröße in der Lage z. B. die Energie eines mittelschweren Fahrzeuges aufzunehmen, das mit bis zu 15 km/h auf ein stehendes Hindernis auffährt. Mit Öldruckdämpfern ist dies nur mit äußerst aufwendigen Konstruktionen möglich.

Der vorgegebene Druck im Raum 6 hängt nur von der gewünschten Rückstellkraft ab. Der Raum 6 kann auch mit atmosphärischer Luft von Normaldruck gefüllt sein, wenn eine besonders geringe Rückstellung des Kolbens gewünscht wird. Zur Verbesserung der Führung überlappen sich Kolben 3, Kolbenstange 5 und Zylinder 1 im ausgefahrenen Zustand des Dämpfers in einem relativ weiten Bereich. Die Kolbenstange 5 ist über einen einfachen Ring 10 an der Innenwand des Zylinders 1 geführt. Der Kolben 3 ist mit mindestens einer durchgehenden Öffnung 11 (Steueröffnung) ausgerüstet. Die Öffnung 11 ist im Dämpfer gemäß Fig. 1 und 2 axial angeordnet. Sie kann aber auch am Rand des Kolbens 3 angeordnet sein. Ein Dichtungsring 14 dichtet den Kolben 3 gegen die Innenwand des Zylinders ab. Die Kolbenstange 5 kann am oberen Ende mit einem Ventil ausgerüstet sein, wenn der Raum 6 mit wechselndem Druck beaufschlagt werden soll. Der Dämpfer kann sowohl stehend als auch liegend montiert werden. Die Führung und Abdichtung des Kolbens ist konstruktiv extrem einfach ausführbar.

Der Dämpfer nach Fig. 2 unterscheidet sich hinsichtlich der Konstruktion von der Ausführungsform nach Fig. 1 dadurch, daß die Kolbenstange 5a zum Teil einen erweiterten Querschnitt 13 an der dem Kolben 3 abgewandten Seite der Kolbenstange 5a aufweist. Der Trennkolben 7a ist in diesem Fall in der erweiterten Kolbenstange angeordnet und wird durch den Dichtungsring 9a an der Innenwand der Kolbenstange geführt.

Im Inneren der mit dem Dämpfungsfluid gefüllten Zylinderkammer 18 ist ein konischer Steuerstift (Steuerelement) 15 vorgesehen, der in der Mitte der Bodenplatte 2 des Zylinders 1 befestigt ist. Der Steuerstift 15 kann auch über eine Feder mit der Bodenplatte 2 verbunden sein. Die Spitze 16 des Steuerstiftes 15 ragt bei Ruhestellung des Dämpfers in die Öffnung 11 des Kolbens 3 hinein. Der Steuerstift 15 besteht z. B. ganz oder teilweise aus Metall, Gummi oder Kunststoff.

Der Steuerstift 15 kann auch am Trennkolben 7 befestigt, sein, z. B. über eine Schraubverbindung. Der Steuerstab kann auch stufenförmig ausgebildet sein.

Die Öffnung des Kolbens 3 kann gegebenenfalls mit einer elastischen Auskleidung 17 zur Steuerung der Dämpfung ausgerüstet sein. Auf diese Weise kann sich die Öffnung unterschiedlichen Krafteinwirkungen automatisch anpassen.

Die Auskleidung 17 ist in Fig. 1, 2 in gestrichelter Form dargestellt.

Der Steuerstift 15 wirkt wegabhängig. Wenn der Kolben 3 mit der Öffnung 11 bei Belastung über den Steuerstab 15 fährt, wird die Durchtrittsfläche der Öffnung verkleinert. Die Verkleinerung der Durchtrittsfläche gleicht die Verlangsamung der Kolbengeschwindigkeit während der Dämpfung aus, so daß die Dämpfkraft über den Weg idealisiert wird.

Bei Belastung des Dämpfers fährt der Kolben 3 in den Zylinder 1 hinein, wobei das inkompressible, viskose, hochwärmeleitfähige Dämpfungsfluid 8 aus der Zylinderkammer 18 durch die Öffnung 11 in die Ausgleichskammer 12, 12a der hohlen Kolbenstange 5, 5a gedrückt wird. Damit kommt es zu einer axialen Verschiebung des Trennkolbens 7, 7a wodurch der Druck im Raum 6, 6a erhöht wird. Im Raum 6a wird der Druck aufgrund des größeren Druckgasreservoirs weniger erhöht, was zu einer schwächeren Rückstellung, das heißt, zu einer weicheren Feder führt. Dies ist z. B. bei Aufzügen Sicherheitsgurtdämpfern und Fahrzeugen erwünscht, um die Wirkung der Beschleunigung auf den Körper weich abzufangen.

Damit während der Druckbelastung kein Vakuum im Ringraum zwischen dem Zylinder 1 und der Kolbenstange 5 erzeugt wird, ist die Zylinderwand mit einer Öffnung 54 für den Druckausgleich ausgerüstet.

Die Dämpfkraft $F_D$ ist von der Rheologie des Dämpfungsfluids, das heißt, der Geschwindigkeit, mit der das Dämpfungsfluid durch die Öffnung 11 fließt, abhängig und folgt der allgemeinen Formel:

$$F_D = k \cdot v^n$$

$F_D$ = Dämpfkraft (N)

$k$ = Dämpfungsfaktor $\left(\dfrac{N}{s \cdot m}\right)$

$v$ = Kolbengeschwindigkeit (m/s)

$n$ = Geschwindigkeitsexponent

Die Faktoren k und n, die die Art der Dämpfung (progressiv, linear, degressiv) bestimmen, sind hier von der Form der Öffnung 11 durch die das Dämpfungsfluid strömt, der Viskosität und der Durchströmgeschwindigkeit des Fluids abhängig.

Die Reaktionskraft der erfindungsgemäßen Dämpfer setzt sich zusammen aus der sich bei der Drosselung der Fluidströmung ergebenden Dämpfungskraft und der sich infolge der Druckerhöhung in der Luftkammer bzw. der Druckgaskammer aufbauenden Gasfederkraft. In der Drosselöffnung wird der größte Teil der Aufprallenergie in Wärmeenergie umgewandelt. Der Rest der Aufprallenergie wird von der Gasfeder, die durch die Komprimierung der Gasfüllung in dem Raum 6, 6a gebildet wird, gespeichert. Diese von der Feder aufgenommene Aufprallenergie wird nach dem Stoß ebenfalls gedrosselt wieder freigegeben, indem infolge der Federkraft das Fluid aus dem Raum 12 über die Öffnung 11 in die Zylinderkammer 18 zurückgedrückt wird. Dabei kehrt die mit dem Kolben 3 verbundene Kolbenstange in ihre Ausgangslage zurück. Durch die Kombination des Querschnitts der Öffnung und des gleichzeitigen Druckaufbaues der Gasfeder wird hierbei eine geschwindigkeitsabhängige Steuerung der Dämpfung erreicht.

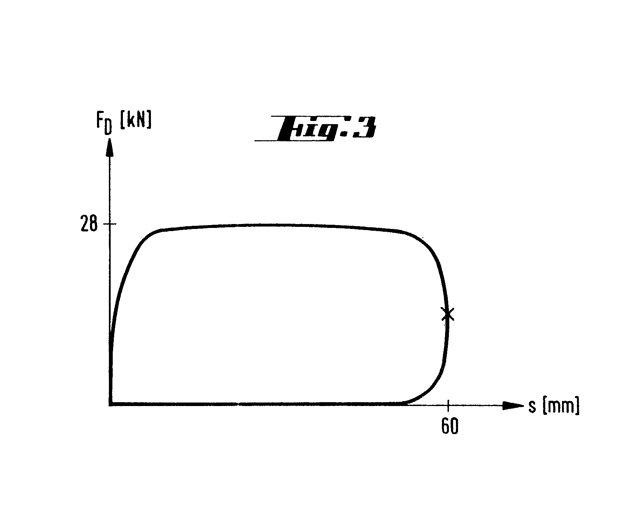

Fig. 3 zeigt das Dämpfkraft/Weg-Diagramm des Dämpfers nach Fig. 1. Die Last betrug 500 kg, die Dämpfkraft $F_D$ 28 kN, der Gesamthub 60 mm und die Geschwindigkeit $v_o = 2,3$ m/sec. Aufgrund der Tatsache, daß die Durchtrittsfläche zwischen Kolbenöffnung 11 und Steuerstift 15 zu Beginn der Stoßbelastung größer ist, ist der Dämpfkraftaufbau zu Beginn weicher, d. h. die Kennlinie steigt weniger steil an. Die Aufprallgeschwindigkeit wird dann entlang der Linearen auf Null verzögert und zum Hubende fällt die Dämpfkraft leicht ab. Ab der mit x gekennzeichneten Stelle erfolgt die Rückstellung der Kolbenstange. Die Dämpfung wird hier trotz der größeren Durchtrittsöffnung idealisiert bzw. linearisiert durch den Steuerstift 15, der während der Dämpfung in die Kolbenöffnung eindringt. Auch die Rückstellung wird durch das Herausgleiten des Steuerstabes 15 wie die Kennlinie zeigt, idealisiert, d. h. die Dämpferkennlinie ist quasi rechteckig.

## Patentansprüche

1. Hydraulisch wirkender Stoß- und Schwingungsdämpfer mit einem einseitig geschlossenen Zylinder (1), der eine Zylinderkammer (18) umschließt, einem in dem Zylinder (1) verschiebbaren mit einer als Düse ausgebildeten Steueröffnung (11) versehenen Kolben (3), der mit einer aus dem offenen Ende des Zylinders (1) herausragenden hohlen Kolbenstange (5) verbunden ist, die eine Ausgleichskammer (12) und einen von derselben durch einen verschiebbaren Trennkolben (7) abgetrennten, mit einem kompressiblen Mittel versehenen Kompressionsraum (6) enthält, wobei Zylinderkammer (18) und Ausgleichskammer (12) mit einem nicht-newtonschen Dämpfungsfluid (8) gefüllt sind, das bei Belastung des Stoßdämpfers aus der Zylinderkammer (18) über die Steueröffnung (11) in die Ausgleichskammer (12) und umgekehrt preßbar ist, dadurch gekennzeichnet, daß die Steueröffnung (11) mit einem in sie hineinragenden Steuerelement (15) zusammenwirkt, dessen Querschnitt sich über die Länge ändert und das Dämpfungsfluid (8) eine dauerplastische, homogene Paste aus Graphit, 0,1 bis 8 Gew.-% Netzmittel, 0,1 bis 10 Gew.-% Strukturviskositätsmittel und 40 bis 70 Gew.-% Polyglykoläther, Polyglykolester und/oder einem gesättigten aromatischen oder aliphatischen Carbonsäureester, jeweils bezogen auf das Gesamtgewicht der Paste (8) ist.

2. Dämpfer nach Anspruch 1, dadurch gekennzeichnet, daß das kompressible Mittel im Kompressionsraum (6) der hohlen Kolbenstange (5) aus Luft unter Normaldruck oder Überdruck besteht und gegebenenfalls ein zusätzliches mechanisches Federelement, insbesondere eine Spiralfeder, Kegelpufferfeder, Gummifeder, ein elastischer Kunststoffblock oder eine Gummimanschette, im Raum (6) zur Verbesserung der Rückstellung und/oder des dynamischen Ausschubs des Dämpfers angeordnet ist.

3. Dämpfer nach einem der vorhergehenden Ansprüche, dadurch gekennzeichnet, daß die Kolbenstange (5a) einen teilweise erweiterten Querschnitt (13) an der dem Kolben (3) gegenüberliegenden Seite der Kolbenstange aufweist, wobei der Trennkolben (7a) in dem erweiterten Teil der Kolbenstange angeordnet ist.

3. Dämpfer nach einem der vorhergehenden Ansprüche, dadurch gekennzeichnet, daß die Kolbenstange (5a) einen teilweise erweiterten Querschnitt (13) an der dem Kolben (3) gegenüberliegenden Seite der Kolbenstange aufweist, wobei der Trennkolben (7a) in dem erweiterten Teil der Kolbenstange angeordnet ist.

4. Dämpfer nach einem der vorhergehenden Ansprüche, dadurch gekennzeichnet, daß die Steueröffnung (11) axial im Kolben (3) als durchgehende Öffnung angeordnet ist und das Steuerelement (15) als Steuerstift konisch, parabolisch oder in abgestufter Form ausgebildet ist und aus einem festen, temperaturstabilen Material, insbesondere Metall, oder einem bei Krafteinwirkung sich veränderndem Material, insbesondere Kunststoff oder Gummi besteht.

5. Dämpfer nach Anspruch 4, dadurch gekennzeichnet, daß der Steuerstift (15) einen zur Spitze des Stifts hin abnehmenden Querschnitt aufweist, wobei der Stift in Axialrichtung mit mindestens einer in die Stiftoberfläche eingelassenen Nut oder mit einer Abflachung ausgerüstet ist.

6. Dämpfer nach einem der Ansprüche 1, 2 oder 3, dadurch gekennzeichnet, daß das Steuerelement (15) aus mindestens einem in die Zylinderinnenwand eingelassenen Keil besteht und die durchgehende Steueröffnung (11) so im Randbereich des Kolbens (3) angeordnet ist, daß sie beim Ein- oder Ausfahren des Kolbens (3) berührungsfrei an dem Keil vorbeigleitet und dabei den Öffnungsquerschnitt vergrößert bzw. verkleinert.

7. Dämpfer nach einem der Ansprüche 4 oder 5, dadurch gekennzeichnet, daß der Steuerstift (15) am Trennkolben (7, 7a) oder an der Bodenfläche (2) des Zylinders (1), gegebenenfalls in abgefederter Form, angeordnet ist.

8. Dämpfer nach einem der vorhergehenden Ansprüche, dadurch gekennzeichnet, daß die Steueröffnung (11) im Kolben (3) einen zylindrischen, parabolischen, kegeligen oder abgestuften zylindrischen Querschnitt aufweist und die Öffnung (11) insbesondere mit einem flexiblen bzw. elastischen Mittel (17), insbesondere Kunststoff, vorzugsweise einem Elastomer ausgekleidet ist.

9. Dämpfer nach Anspruch 1, dadurch gekennzeichnet, daß der Polyglykoläther und/oder -ester eine Viskosität von etwa 10 mm²/s bis 1000 mm²/s bei 50°C, insbesondere von etwa 40 mm²/s bis 300 mm²/s bei 50°C und einen Stockpunkt zwischen —50°C und 0°C, insbesondere —40°C bis —10°C und eine relative, mittlere Molmasse von etwa 700 bis 20 000, insbesondere etwa 1100 bis 3800, vorzugsweise etwa 1100 bis 2300 aufweist.

10. Dämpfer nach Anspruch 9, dadurch gekennzeichnet, daß der Polyglykoläther ein Mono- und/oder Diäther der Polyäthylen-, Polypropylen- oder Polybutylenglykole ist, wobei die Äthergruppe des Mono- oder Diäthers insbesondere eine gesättigte, geradkettige oder verzweigte Alkoxygruppe mit 1 bis 10 C-Atomen, insbesondere 2 bis 6 C-Atomen ist, insbesondere ein Polyäthylenglykolmonoäthyläther, -propyläther oder -butyläther, Polypropylenglykolmonoäthyläther, -propyläther oder -butyläther, Polybutylenglykolmonomethyläther, -äthyläther, -propyläther, -butyläther oder -pentyläther ist.

11. Dämpfer nach Anspruch 1, dadurch gekennzeichnet, daß der Polyglykolester ein Mono- und/oder Diester der Polyäthylen-, Polypropylen- oder Polybutylenglykole, insbesondere ein Monoester des Polyäthylen-, Polypropylen- oder Polybutylenglykolmonoäthers ist.

12. Dämpfer nach Anspruch 1, dadurch gekennzeichnet, daß die Polyglykoläther, Polyglykolester und/oder gesättigten aromatischen oder aliphatischen Carbonsäureester in einer Menge von etwa 50 bis 60 Gew.-%, bezogen auf das Gesamtgewicht der Paste (8) vorliegen.

13. Dämpfer nach einem der Ansprüche 1 oder 12, dadurch gekennzeichnet, daß der Carbonsäureester der Ester eines gesättigten aliphatischen Alkohols mit einer gesättigten aliphatischen $C_5$ bis $C_{12}$-Monocarbonsäure oder einer gesättigten aliphatischen Dicarbonsäure, Dibenzolcarbonsäure oder Tribenzol-Carbonsäure ist.

14. Dämpfer nach Anspruch 1, dadurch gekennzeichnet, daß das Netzmittel ein Aminsalz der Ölsäure, Linolsäure, Palmitinsäure und/oder Stearinsäure, Talgfettsäurediamin, Kokosfettsäurediamin, fluorierter Alkylpolyoxyäthylenäthanol, Kaliumfluoralkylcarboxylat und/oder fluoriertes Alkylammoniumjodid ist.

15. Dämpfer nach Anspruch 1, dadurch gekennzeichnet, daß das Strukturviskositätsmittel gemahlenes Aluminiumsilikat, insbesondere Bentonite oder amorphes Siliciumdioxid ist, wobei es in einer Menge von 0,5 bis 5 Gew.-% in der Paste vorliegt.

## Claims

1. Hydraulically operating shock and vibration absorber, having a cylinder (1) closed at one end, surrounding a cylinder chamber (18), a piston (3) being slidably arranged in the cylinder (1) and provided with a nozzle-shaped control port (11), the piston being connected with a hollow piston rod (5) extending out of the open end of the cylinder (1), being provided with an equalizing chamber (12) and a compression chamber (6) being separated therefrom by a slidable separating piston (7) and being filled with a compressible agent, the cylinder chamber (18) and the equalizing chamber (12) being filled with a non-Newtonian damping fluid (8), being pressable from the cylinder chamber (18) via the control port (11) into the equalizing chamber (12) and vice versa when the shock absorber is under load, being characterized in that the control port (11) cooperates with a control element (15) having a varying cross-section and projecting into the control port, and the damping fluid (8) being a permanently plastic, homogeneous paste consisting of graphite, 0.1 to 8% by weight wetting agent, 0.1 to 10% by weight structural viscosity agent and 40 to 70% by weight polyglycolether, polyglycolester and/or a saturated aromatic or aliphatic carboxylic acid ester, in each case based on the total weight of the paste (8).

2. Damper according to claim 1, characterized in that the compressible agent in the compression chamber (6) of the hollow piston rod (5) consists of atmospheric air under normal pressure or excess pressure and optionally there is arranged an additional mechanical spring element, especially a spiral spring, a tapered cushioning spring, a rubber spring, an elastic block of plastic or a rubber cuff in the chamber (6) for improving the return movement and/or the dynamic out-thrust of the damper.

3. Damper according to one of the preceding claims, characterized in that the piston rod (5a) is provided with a partially enlarged cross section (13) at the side of the piston rod opposing the piston (3) and the separating piston (7a) is arranged in the enlarged part of the piston rod.

4. Damper according to one of the preceding claims, characterized in that the control port (11) is arranged axially in the piston (3) as a continuous opening and the control element (15) as control pin is of conical, parabolic or stepped design and consists of a solid temperature-stable material, especially metal, or a material undergoing a change under the influence of force, especially plastic or rubber.

5. Damper according to claim 4, characterized in that the control pin (15) is provided with a cross-section decreasing towards the tip, and the pin being provided with at least one groove sunk in axial direction into the pin surface or with a flattening.

6. Damper according to one of claims 1, 2 or 3, characterized in that the control element (15) consists of at least one wedge sunk into the inner wall of the cylinder and the continuous control opening (11) is arranged at the periphery of the piston (3) in such a way that when moving in and out the piston (3) passes free of contact past the wedge while increasing or decreasing the cross-section of the opening.

7. Damper according to one of claims 4 or 5, characterized in that the control pin (15) is arranged at the separating piston (7, 7a) or at the base (2) of the cylinder (1), optionally being springmounted.

8. Damper according to one of the preceding claims, characterized in that the control port (11) in the piston (3) has a cylindrical, parabolic, conical or stepped cross-section and the opening (11) is lined especially with a flexible or elastic agent (17), respectively, especially plastic, preferably an elastomer.

9. Damper according to claim 1, characterized in that the polyglycolether and/or ester has a viscosity of about 10 mm²/s to 1000 mm²/s at 50° C, especially about 40 mm²/s to 300 mm²/s at 50° C and a setting point ranging from −50° C to 0° C, especially −40° C to −10° C and a relative average mol mass of about 700 to 20 000, especially about 1100 to 3800, preferably about 1100 to 2300.

10. Damper according to claim 9, characterized in that the polyglycolether is a mono and/or diether of polyethylene, polypropylene or polybutylene glycol, the ether group of the mono or diether being especially a saturated, straight-chained or branched alkoxy group having 1 to 10 C-atoms, especially 2 to 6 C-atoms, especially a polyethylene-glycol-mono-ethylether, -propylether or -butylether, polypropylene-glycol-mono-ethylether, -propylether or -butylether, polybutylene-glycol-mono-methylether, -ethylether, -propylether, -butylether of -pentylether.

11. Damper according to claim 1, characterized in that the polyglycolester is a mono and/or diester of polyethylene, polypropylene or polybutylene glycol, especially a monoester of polyethylene, polypropylene or polybutylene-glycol-mono-ether.

12. Damper according to claim 1, characterized in that the polyglycolether, polyglycolester and/or saturated aromatic or aliphatic carboxylic acid ester are present in an amount of about 50 to 60% by weight, based on the total weight of the paste (8).

13. Damper according to one of claims 1 or 12, characterized in that the carboxylic acid ester is the ester of a saturated aliphatic alcohol with a saturated aliphatic $C_5$ to $C_{12}$-mono-carboxylic acid or a saturated aliphatic dicarboxylic acid, dibenzol-carboxylic acid or tribenzol-carboxylic acid.

14. Damper according to claim 1, characterized in that the wetting agent is an amin salt of oleic acid, linoleic acid, palmitic acid and/or stearic acid, a diamine of tallow fat acid, coconut oil acid diamine, fluorinated alkylpolyoxyethylenethanol, potassium fluoralkyl-carboxylate and/or fluorinated alkylammoniumiodide.

15. Damper according to claim 1, characterized in that the structural viscosity agent is ground aluminium silicate, especially bentonite or amorphous silicon dioxide, being present in the amount of 0.5 to 5% by weight in the paste.

**Revendications**

1. Amortisseur de chocs et d'oscillations à action hydraulique, comportant un cylindre (1) fermé d'un côté et qui délimite une chambre de cylindre (18), et comportant un piston (3) susceptible de se déplacer dans le cylindre (1) et muni d'un orifice de commande (11) revêtant la forme d'une buse, et qui est relié à une tige de piston creuse (5) faisant saillie hors de l'extrémité ouverte du cylindre (1) et qui comprend une chambre de compensation (12) et une chambre de compression (6) garnie d'un fluide compressible et qui est séparée de la chambre de compensation par un piston de séparation (7) susceptible d'être déplacé, la chambre (18) du cylindre et la chambre de compensation (12) étant remplies d'un fluide (8) non newtonien d'amortissement qui, lors de la sollicitation de l'amortisseur de chocs est susceptible d'être envoyé sous pression à partir de la chambre (18) du cylindre, par l'intermédiaire de l'orifice de commande (11), dans la chambre de compensation (12), et vice-versa, amortisseur caractérisé en ce que l'orifice de commande (11) coopère avec un élément de commande (15) pénétrant dans cet orifice et dont la section transversale varie sur la longueur de cet élément, le fluide d'amortissement (8) étant une pâte homogène, plastique en permanence, constituée de graphite, de 0,1 à 8% en poids d'un agent mouillant, de 0,1 à 10% en poids d'un agent de viscosité de structure et de 40 à 70% en poids de polyglycol-éther, de polyglycol-ester et/ou d'un ester d'acide carbonique aromatique saturé ou bien aliphatique, par rapport respectivement au poids total de la pâte (8).

2. Amortisseur selon la revendication 1, caractérisé en ce que le fluide compressible dans la chambre de compression (6) de la tige de piston creuse (5) est constitué d'air sous pression normale ou bien en surpression, tandis qu'éventuellement un élément élastique mécanique supplémentaire, notamment un ressort à boudin, un ressort d'amortissement conique, un ressort en caoutchouc, un bloc en matière plastique élastique ou bien une manchette de caoutchouc, est disposé dans la chambre (6) pour améliorer le rappel et/ou la poussée dynamique vers l'extérieur de l'amortisseur.

3. Amortisseur selon une des précédentes revendications, caractérisé en ce que la tige de piston (5a) comporte du côté opposé au piston (3), une section transversale s'évasant partiellement (13), le piston de séparation (7a) étant disposé dans cette partie évasée de la tige du piston.

4. Amortisseur selon une des précédentes revendications, caractérisé en ce que l'orifice de commande (11) est disposé axialement dans le piston (3) sous la forme d'orifice traversant, tandis que l'élément de commande (15) est constitué par une broche de commande de forme conique, parabolique ou échelonnée, et est constitué d'un matériau résistant stable à la température, notamment du métal, ou bien d'un matériau se modifiant sous l'action d'un effort, notamment une matière plastique ou du caoutchouc.

5. Amortisseur selon la revendication 4, caractérisé en ce que la broche de commande (15) présente une section transversale se réduisant vers la pointe de cette broche, cette broche étant munie en direction axiale d'au moins une rainure ménagée dans la surface de la broche, ou bien d'un méplat.

6. Amortisseur selon une des revendications 1, 2 ou 3, caractérisé en ce que l'élément de commande (15) est constitué d'au moins un coin inséré dans la paroi interne du cylindre, tandis que l'orifice de commande traversant (11) est disposé dans la zone de bordure du piston (3) de sorte que lors du déplacement du piston (3) vers l'intérieur ou l'extérieur, cet orifice glisse sans contact le long du coin et qu'ainsi la section de l'orifice augmente ou bien diminue.

7. Amortisseur selon une des revendications 4 ou 5, caractérisé en ce que la broche de commande (15) est disposée sur le piston de séparation (7, 7a) ou bien sur la surface de fond (2) du cylindre (1), éventuellement d'une façon élastique.

8. Amortisseur selon une des précédentes revendications, caractérisé en ce que l'orifice de commande (11) dans le piston (3) présente une section transversale cylindrique, parabolique, conique ou bien cylindrique échelonnée, cet orifice (11) étant revêtu notamment d'un matériau flexible ou élastique (17) notamment une matière plastique, de préférence un élastomère.

9. Amortisseur selon revendication 1, caractérisé en ce que le polyglycol-éther et/ou le polyglycol-ester présentent une viscosité d'environ 10 mm$^2$/s à 1000 mm$^2$/s à 50°C, notamment d'environ 40 mm$^2$/s à 300 mm$^2$/s à 50°C, et un point de solidification entre −50°C et 0°C, notamment entre −40°C et −10°C et une masse moléculaire moyenne relative d'environ 700 à 20 000, notamment d'environ 1100 à 3800, de préférence d'environ 1100 à 2300.

10. Amortisseur selon la revendication 9, caractérisé en ce que le polyglycol-éther est un mono-éther et/ou un di-éther du polyéthylène glycol, du polypropylène glycol ou bien du polybutylène glycol, le groupe éther du mono-éther ou bien du di-éther étant notamment un groupe alkoxy saturé, à chaîne rectiligne ou ramifiée avec un à dix atomes de carbone, notamment 2 à 6 atomes de carbone, notamment un polyéthylène glycolmonoéthyléther, un polyéthylène glycolmonopropyléther ou un polyéthylène glycol mono butyléther, un polypropylène glycolmonoéthyléther, un polypropylène glycol monopropyléther ou un polypropylène glycol monobutyléther, un polybutylène glycol monométhyléther, un polybutylène glycol monoéthyléther, un polybutylène glycol monopropyléther, un polybutylène glycol monobutyléther ou bien un polybutylène glycol monopentyléther.

11. Amortisseur selon la revendication 1, caractérisé en ce que le polyglycolester est un mono-ester et/ou un di-ester du polyéthylène glycol, du polypropylène glycol ou du polybutylène glycol notamment un mono-ester du polyéthylène glycol mono-éther, du polypropylène glycol mono-éther ou bien du polybutylène glycol mono-éther.

12. Amortisseur selon la revendication 1, caractérisé en ce que le polyglycoléther, le polyglycolester et/ou les esters d'acides carboniques aromatiques ou aliphatiques saturés sont prévus en une quantité d'environ 50 à 60% en poids rapportés au poids total de la pâte (8).

13. Amortisseur selon une des revendications 1 ou 12, caractérisé en ce que l'ester d'acide carbonique est l'ester d'un alcool aliphatique saturé avec un acide mono-carbonique aliphatique saturé $C_5$ à $C_{12}$ ou bien un acide dicarbonique aliphatique saturé, un acide dibenzolcarbonique ou bien un acide tribenzol carbonique.

14. Amortisseur selon la revendication 1, caractérisé en ce que l'agent mouillant est un sel amine de l'acide oléique, de l'acide linoléique, de l'acide palmitique et/ou de l'acide stéarique, de la diamine d'acide gras de suif, de la diamine d'acide gras de coco, de l'alkylpolyoxyéthylèneéthanol fluoré, du fluoralkylcarboxylate de potassium et/ou de l'iodure d'alkylamonium fluoré.

15. Amortisseur selon la revendication 1, caractérisé en ce que l'agent de viscosité de structure est du silicate d'aluminium finement broyé, notamment de la bentonite ou bien du dioxyde de silicium amorphe, qui est prévu en une quantité de 0,5 à 5% en poids dans la pâte.

**Fig.1**

*Fig.2*

Fig. 3